# EUROPEAN PATENT APPLICATION

(11) **EP 1 106 579 A1**
(43) Date of publication of application: **13.06.2001**
(21) Application number: 00927760.9
(22) Date of filing: 12.05.2000
(51) Int. Cl.: C02F 1/70

(54) **METHOD OF DECOMPOSING ORGANOCHLORINE COMPOUND**

(30) Priority: 19.05.1999 JP 13862799
(71) Applicant: Hitachi Zosen Corporation, Osaka-shi, Osaka 559-8559 (JP)
(72) Inventor: SEKIGUCHI, Yoshitoshi, Hitachi Zosen Corporation, Osaka-shi, Osaka 559-8559 (JP); SASAKI, Kunio, Hitachi Zosen Corporation, Osaka-shi, Osaka 559-8559 (JP); TANAKA, Shingo, Hitachi Zosen Corporation, Osaka-shi, Osaka 559-8559 (JP); KISHIDA, Hisanori, Hitachi Zosen Corporation, Osaka-shi, Osaka 559-8559 (JP)
(74) Representative: Peaucelle, Chantal
(86) International application number: JP0003082
(87) International publication number: WO0071472

(57) **Abstract**

An aqueous medium containing organochlorine compounds is refluxed under a hydrogen atmosphere or hydrogen gas is bubbled through the aqueous medium containing the organochlorine compounds to bring the medium into gas-liquid contact with hydrogen in the presence of a hydrogenation catalyst and to dechlorinate the organochlorine compounds. Typical examples of the organochlorine compound in the aqueous medium are dioxins, PCB, o-chloroanisole and the like. According to the method of the present invention, the organochlorine compounds can be dechlorinated with the hydrogenation catalyst under mild conditions. Accordingly, the hydrogenation catalyst hardly deteriorates through oxidation of its catalyst metal and is hardly affected by poisoning components such as chlorine and sulfur, and the catalyst has a long life. In the method of carrying out the reaction in the aqueous medium containing alkali, since generated chlorine is absorbed by the medium, apparatus materials hardly corrode.

## Description

### Technical Field

The present invention relates to a method of decomposing organochlorine compounds such as dioxins and polychlorinated biphenyls by dechlorinating the organochlorine compounds in an aqueous medium at relatively low temperatures with a hydrogenation catalyst.

### Background Art

Organochlorine compounds pollute air, river water, groundwater, soil and the like. In particular, organochlorine compounds having toxicity such as carcinogenicity have problems from the viewpoint of environmental pollution. There have been developed a technique for suppressing discharge of these organochlorine compounds and a technique for decomposing organochlorine compounds existing in the environment in the form of pollutants after discharge. In general, many of organochlorine compounds which cause environmental problems are difficult to decompose naturally. Though the following various methods are known as methods of making the organochlorine compounds harmless, each method has disadvantages. Namely, a method of decomposition with ultraviolet radiation, electron radiation or radial rays needs high cost or exhibits low decomposition efficiency. A method of decomposition with microorganism exhibits low decomposition efficiency and a low decomposition rate. A method of decomposition by combustion is likely to generate highly poisonous substances such as dioxins reversely, depending on a combustion condition. Though the method of decomposition by combustion and a method of chemical decomposition with an oxidizing agent are capable of decomposing the organochlorine compounds in several hours, the oxidizing agent leads to problems of corrosion of apparatus materials. A method of oxidative decomposition with supercritical water needs high pressure, temperature and energy.

### Disclosure of the Invention

An object of the present invention is to provide a method of decomposing organochlorine compounds which can solve all the above-mentioned problems of the conventional methods.

The method of decomposing the organochlorine compounds according to the present invention is characterized in that an aqueous medium containing the organochlorine compounds is refluxed in a hydrogen atmosphere in the presence of a hydrogenation catalyst, or hydrogen gas is bubbled through the aqueous medium containing the organochlorine compounds in the presence of the hydrogenation catalyst, to dechlorinate the organochlorine compounds.

The aqueous medium containing the organochlorine compounds can be brought into gas-liquid contact with hydrogen gas by refluxing the aqueous medium in the hydrogen atmosphere or by bubbling hydrogen gas through the aqueous medium.

Typical examples of the organochlorine compound in the aqueous medium are dioxins, polychlorinated biphenyls (PCB), o-chloroanisole and the like.

The aqueous medium preferably contains alkali. The aqueous medium containing the alkali captures chlorine formed by the decomposition of the organochlorine compounds. The alkali can be sodium hydroxide, potassium hydroxide, magnesium hydroxide, sodium carbonate, sodium hydrogencarbonate, potassium hydrogencarbonate, potassium carbonate or ammonia. In particular, sodium carbonate and potassium carbonate are preferable in terms of working environments.

The dechlorination is carried out with the hydrogenation catalyst, preferably its powder. Examples of the hydrogenation catalyst are catalysts comprising palladium, platinum, nickel, ruthenium, rhodium, zinc or a metallic oxide thereof, or catalysts comprising palladium, platinum, nickel, ruthenium, rhodium, zinc or the metallic oxide thereof supported on a carrier.

It is preferable to bubble hydrogen gas through the aqueous medium in order to suspend the powder of the hydrogenation catalyst comprising palladium, platinum, nickel, ruthenium, rhodium, zinc or the metallic oxide thereof supported on the carrier in the medium.

A preferred carrier is made of activated carbon, alumina or zeolite.

These hydrogenation catalysts are generally expensive, but the catalysts can be reused after the dechlorination.

When the organochlorine compound is water-insoluble or slightly soluble in water, it is preferable to add a water-soluble organic solvent to the aqueous medium. Such an organic solvent acts as a dispersant of the water-insoluble or slightly soluble organochlorine compound. Examples of the water-soluble organic solvent are acetone and methanol, and a preferred proportion of the solvent to be added is within about 20% by volume of the aqueous medium.

In preferred embodiment of the method of the present invention, first, the organochlorine compound to be dechlorinated such as dioxins and the hydrogenation catalyst are introduced into a reaction chamber, and the alkali is preferably added thereto. The organic solvent is optionally added thereto. Then, the medium is refluxed at a temperature of preferably room temperature to 200 (more preferably room temperature to 100 ) under a hydrogen atmosphere, preferably under elevated pressure of hydrogen gas (for example, 1 to 20 kgf/cm²), preferably with stirring to bring the medium into gas-liquid contact with hydrogen at the same time to dechlorinate the organochlorine compound.

In another preferred embodiment of the method of the present invention, first, the organochlorine compound and the powder of the hydrogenation catalyst are introduced into the reaction chamber, and the alkali is preferably added thereto. The organic solvent is optionally added thereto. The powder of the hydrogenation catalyst comprises palladium, platinum, nickel, ruthenium, rhodium, zinc or the metallic oxide thereof supported on the carrier. Then, hydrogen gas is bubbled through the aqueous medium at a temperature of preferably room temperature to 200 (more preferably room temperature to 100 ), preferably with stirring to suspend the powder of the hydrogenation catalyst in the medium and to bring the medium into gas-liquid contact with hydrogen at the same time to dechlorinate the organochlorine compound.

After completing the dechlorination, excess alkali is neutralized in a post-treatment tank. Hydrochloric acid, sulfuric acid or the like is used as a neutralizing agent.

### Brief Description of Drawing

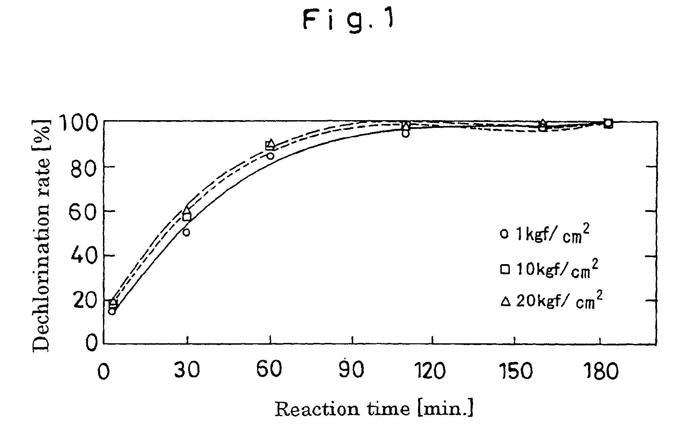

Fig. 1 is a graph showing relations between dechlorination rates and reaction time.

### Best Mode for Carrying out the Invention

The present invention is described more practically by Examples hereinafter, but the scope of the present invention is not limited to the following Examples.

### Example 1

Into a reaction chamber were introduced 10 g of o-chloroanisole and 300 ml of a 1 N aqueous sodium carbonate solution. To the mixture was added 1 g of powder of a hydrogenation catalyst comprising 10% by weight of palladium supported on activated carbon. Air in the reaction chamber was replaced with hydrogen gas, and the whole was refluxed under elevated pressure of hydrogen (1 kgf/cm²) at 100 with stirring for 24 hours.

After completing the reaction, the reaction mixture was transferred into a post-treatment tank and neutralized with 1 N sulfuric acid, and then the treated reaction mixture was analyzed by gas chromatography. As a result, formation of anisole, which is a dechlorinated product of o-chloroanisole, was observed, and o-chloroanisole was not detected.

### Example 2

The same procedure as in Example 1 was repeated except that the reaction temperature was altered into 50 . As a result, anisole was formed, and o-chloroanisole was not detected.

### Example 3

The same procedure as in Example 1 was repeated except that the reaction conditions were altered into a hydrogen atmosphere at 1 MPa, room temperature and two hours. As a result, anisole was formed, and o-chloroanisole was not detected.

### Example 4

The same procedure as in Example 1 was repeated except that the reaction conditions were altered into a hydrogen atmosphere at 2 MPa, room temperature and two hours. As a result, anisole was formed, and o-chloroanisole was not detected.

### Example 5

The same procedure as in Example 1 was repeated except that the reaction conditions were altered into a hydrogen atmosphere at 2 MPa, 50 and 30 minutes. As a result, anisole was formed, and o-chloroanisole was not detected.

### Example 6

In 450 ml of a 1 N aqueous sodium carbonate solution was dissolved 6 ml of PCB, and this solution was introduced into a stainless steel autoclave. To this solution was added 50 ml of acetone. To the mixture was added 4.0 g of powder of a hydrogenation catalyst comprising 10% by weight of palladium supported on activated carbon. The whole was stirred while bubbling a hydrogen gas through the liquid at partial pressure of hydrogen gas of 1 kgf/cm² to suspend the powder of the hydrogenation catalyst to the liquid. While a reaction was carried out at room temperature (20 ) for 180 hours, samples of the reaction mixture were taken out.

The same procedures as mentioned above were repeated except that the partial pressure of hydrogen gas was altered into 10 kgf/cm² and 20 kgf/cm².

The obtained respective sampling mixtures were analyzed by gas chromatography to determine dechlorination rates of PCB. It was also confirmed that PCB was dechlorinated to form biphenyl by gas chromatography. The larger the amount of the catalyst, the higher did a rate of dechlorination tend to be. Fig. 1 shows relations between the dechlorination rates and reaction time.

As apparent from Fig. 1, about 100% of PCB was dechlorinated for about 90 minutes.

In the method of decomposing the organochlorine compounds according to the present invention, since the organochlorine compounds are dechlorinated in the aqueous medium in the presence of hydrogen, the following effects are exhibited.

The organochlorine compounds such as dioxins can be dechlorinated with the hydrogenation catalyst under mild conditions, for example, at room temperature to 100 in the presence of hydrogen gas at ordinary pressure to 2 MPa. Accordingly, the hydrogenation catalyst hardly deteriorates through oxidation of its catalyst metal and is hardly affected by poisoning components such as chlorine and sulfur, and the catalyst has a long life.

In the method of carrying out the reaction in the aqueous medium containing the alkali, since generated chlorine is absorbed by the medium, apparatus materials hardly corrode.

Since the reaction conditions of the method of the present invention are mild, the method uses less energy such as fuel, and operation and maintenance are easier than prior arts.

Though the hydrogenation catalyst is expensive, the catalyst can be reused. Accordingly, the method of the present invention is economical.

## Claims

1. A method of decomposing an organochlorine compound characterized in that an aqueous medium containing the organochlorine compound is refluxed in a hydrogen atmosphere in the presence of a hydrogenation catalyst, or hydrogen gas is bubbled through the aqueous medium containing the organochlorine compound in the presence of the hydrogenation catalyst, to dechlorinate the organochlorine compound.

2. A method as claimed in claim 1, wherein the aqueous medium containing the organochlorine compound is stirred.

3. A method as claimed in claim 1, wherein the aqueous medium contains alkali.

4. A method as claimed in claim 3, wherein the alkali is sodium hydroxide, potassium hydroxide, magnesium hydroxide, sodium carbonate, sodium hydrogencarbonate, potassium hydrogencarbonate, potassium carbonate or ammonia.

5. A method as claimed in claim 1, wherein the hydrogenation catalyst is a catalyst comprising palladium, platinum, nickel, ruthenium, rhodium, zinc or a metallic oxide thereof, or a catalyst comprising palladium, platinum, nickel, ruthenium, rhodium, zinc or the metallic oxide thereof supported on a carrier.

6. A method as claimed in claim 1, wherein hydrogen gas is bubbled through the aqueous medium in order to suspend the hydrogenation catalyst comprising palladium, platinum, nickel, ruthenium, rhodium, zinc or a metallic oxide thereof supported on a carrier in the medium.

7. A method as claimed in claim 5 or 6, wherein the carrier is made of activated carbon, alumina or zeolite.

8. A method as claimed in claim 1, wherein, a watersoluble organic solvent is added to the aqueous medium.
